# FASCICULE DE BREVET EUROPEEN

(11) **EP 3 659 922 B1**
(45) Date de publication et mention de la délivrance du brevet: **01.06.2022**
(21) Numéro de dépôt: 19209706.1
(22) Date de dépôt: 18.11.2019
(51) Int. Cl.: B64D 27/02, B64D 31/14, B64D 35/08

(54) **AERONEF DE TYPE MODULAIRE ET PROCEDE DE PREPARATION D'UN TEL AERONEF A UNE MISSION SPECIFIQUE**
EIN FLUGZEUG EINES MODULAREN TYPS UND EIN VERFAHREN ZUR VORBEREITUNG EINES SOLCHEN FLUGZEUGS FÜR EINE BESTIMMTE MISSION
AN AIRCRAFT OF A MODULAR TYPE, AND A METHOD OF PREPARING SUCH AN AIRCRAFT FOR A SPECIFIC MISSION

(30) Priorité: 29.11.2018 FR 1872048
(43) Date de publication de la demande: 03.06.2020
(73) Titulaire: Airbus Helicopters, 13725 Marignane Cedex (FR)
(72) Inventeur: GAZZINO, Marc, 13012 MARSEILLE (FR)
(74) Mandataire: GPI Brevets

(56) Documents cités:
- EP-A1- 2 735 512
- EP-A1- 3 095 695
- FR-A1- 2 962 404

## Description

La présente invention se rapporte au domaine de l'aéronautique et plus particulièrement aux aéronefs comportant au moins un rotor destiné à participer à au moins la sustentation, voire également à la propulsion de l'aéronef dans les airs.

De façon générale, de tels aéronefs sont conçus avec une motorisation spécifique qui ne peut être modifiée ou remplacée par la suite par une motorisation d'un type différent en fonction des besoins de l'utilisateur. En effet, chaque aéronef est conçu pour recevoir une motorisation qui peut être par exemple de type à combustion et/ou de type électrique.

Le document EP3095695 décrit une installation motrice hybride d'un aéronef multimoteur, équipée d'au moins deux moteurs thermiques. Un moteur électrique sert aussi à l'entraînement d'un rotor de l'aéronef multimoteur. Le moteur électrique est apte à apporter un complément de puissance quand il est activé. Chaque moteur est mécaniquement relié à une boîte de transmission de puissance principale. Un dispositif de régulation a pour fonction de contrôler les moteurs. Le moteur électrique ne fonctionne pas en mode moteur durant une étape initiale de fonctionnement, de sorte qu'un organe tournant ne met alors pas en mouvement le rotor. Ce moteur électrique peut alors au besoin prélever de l'énergie sur la boîte de transmission selon un mode de fonctionnement en alternateur.

Le document EP2735512 décrit un aéronef muni d'une voilure tournante et d'au moins une boîte de transmission de puissance pour l'entraînement en rotation de ladite voilure tournante. Cet aéronef comporte un premier moteur principal et un deuxième moteur principal afin de mettre en mouvement la boîte de transmission de puissance. Dans cet aéronef est prévu un système principal de régulation qui régule le premier moteur principal et le deuxième moteur principal selon une consigne variable. De plus, l'aéronef est muni d'un moteur secondaire mettant en mouvement la boîte de transmission de puissance, et d'un système secondaire de régulation qui régule ce moteur secondaire selon une consigne constante, pour une régulation indépendante de celle opérée par le système principal de régulation.

Les documents FR3040977, US2018170509 et WO9606749 sont également connus.

A titre d'exemple, le document FR 2 962 404 décrit ainsi un aéronef hybride comportant une première motorisation de type à combustion et une deuxième motorisation de type électrique. En outre, un tel aéronef hybride comporte également une unique boite de transmission de puissance principale reliée à la première motorisation et la deuxième motorisation.

Cependant, de tels aéronefs sont alors certifiés avec ces motorisations spécifiques qui doivent être conservées pour toute la durée de vie de ces aéronefs.

Par conséquent, si les besoins de l'utilisateur changent ou si les missions de l'aéronef sont de nature très variées, la motorisation de l'aéronef initialement choisie à l'achat de l'aéronef peut se révéler inadaptée. Ce choix initial de la motorisation est donc parfois très complexe à effectuer et résulte généralement d'un compromis.

En outre, un tel compromis du choix de la motorisation peut engendrer des coûts ultérieurs d'utilisation de l'aéronef très importants. Dans certains cas, l'utilisateur d'un aéronef peut alors parfois être contraint de ne pas utiliser cet aéronef pour toutes les missions qu'il aurait pu envisager initialement.

La présente invention a alors pour objet de proposer un aéronef d'un nouveau type permettant de s'affranchir des limitations mentionnées ci-dessus. Cet aéronef comporte alors une architecture modulaire à la fois d'un point de vue mécanique pour pouvoir transmettre un couple moteur à au moins un rotor et d'un point de vue électrique pour pouvoir commander alternativement ou simultanément des motorisations de différentes natures et plus précisément des motorisations de type à combustion ou de type électrique.

Comme déjà évoqué l'invention se rapporte donc à un aéronef de type modulaire comportant :
- au moins un rotor apte à réaliser en tout ou partie une propulsion et/ou une sustentation de l'aéronef,
- au moins une motorisation de type à combustion ou de type électrique,
- une boite de transmission principale de puissance pour transmettre mécaniquement un couple moteur généré par la (ou les) motorisation(s) au(x) rotor(s), et
- un système électronique avionique d'aide au pilotage de l'aéronef.

Selon l'invention, l'aéronef est remarquable en ce qu'il comporte :
- au moins deux interfaces de connexion électrique constamment connectées électriquement au système électronique avionique, une première interface de connexion électrique reliant électriquement le système électronique avionique à une première motorisation de la (ou des) motorisation(s) et une deuxième interface de connexion électrique apte à être laissée libre ou à relier électriquement le système électronique avionique à une deuxième motorisation de la (ou des) motorisation(s), et
- au moins deux interfaces de connexion mécanique constamment connectées mécaniquement avec la boite de transmission principale de puissance, une première interface de connexion mécanique reliant mécaniquement la boite de transmission principale de puissance à la première motorisation et une deuxième interface de connexion mécanique apte à être laissée libre ou à relier mécaniquement la boite de transmission principale de puissance à la deuxième motorisation, et en ce que le système électronique avionique est configuré pour réaliser automatiquement l'aide au pilotage de l'aéronef d'une part lorsque seulement la première motorisation est connectée électriquement à la première interface de connexion électrique et d'autre part lorsqu'à la fois la première motorisation est connectée électriquement à la première interface de connexion électrique et la deuxième motorisation est connectée électriquement à la deuxième interface de connexion électrique.

Autrement dit, les interfaces de connexion électrique ne sont pas nécessairement toutes connectées respectivement à une motorisation. Ainsi, au moins la première interface de connexion électrique est alors connectée électriquement avec la première motorisation. En outre, ces interfaces de connexion électrique peuvent par exemple se présenter sous la forme d'une ou plusieurs cosses de raccordement électrique male(s) et/ou femelle(s) ou encore sous la forme d'une ou plusieurs baie(s) de raccordement électrique.

De même, les interfaces de connexion mécanique ne sont pas nécessairement toutes connectées respectivement à une motorisation. Ainsi, au moins une de ces interfaces de connexion mécanique est alors reliée mécaniquement avec une motorisation quel que soit son type. En outre, ces interfaces de connexion mécanique peuvent comporter des arbres, des pignons, des roues ou toutes pièces aptes à être mécaniquement entrainées en rotation par une motorisation.

De telles interfaces de connexion mécanique peuvent en outre être agencées à l'intérieur ou s'étendre à l'extérieur d'un carter de la boite de transmission principale de puissance.

Lorsque les interfaces de connexion mécanique sont agencées à l'intérieur du carter de la boite de transmission principale de puissance, ce carter présente alors des orifices aptes à être traversés par un arbre de sortie d'au moins une motorisation. Ces orifices peuvent par ailleurs être bouchés par des capots ou des bouchons amovibles mis en place sur le carter de la boite de transmission principale de puissance, ou retirés du carter de la boite de transmission principale de puissance en fonction du nombre de motorisation(s) connectée(s) aux interfaces de connexion mécanique.

En outre, la deuxième interface de connexion mécanique peut être agencée au niveau d'un point de prélèvement de puissance sur la boite de transmission principale de puissance lorsque la deuxième motorisation est absente ou ne fournit pas de puissance à la boite de transmission principale de puissance.

Un tel point de prélèvement de puissance sur la boite de transmission principale de puissance peut notamment permettre la génération d'une énergie hydraulique ou la génération d'une énergie électrique.

Par suite, le système électronique avionique équipant l'aéronef permet d'adapter automatiquement le contrôle et l'aide au pilotage de l'aéronef en fonction du nombre et de la nature des motorisations connectées avec les deux interfaces électriques. Par exemple, un tel système avionique peut alors comporter au moins un calculateur apte à déterminer le nombre de motorisation(s) et d'identifier le type à combustion ou le type électrique de la (ou des) motorisation(s) connecté(s) électriquement au système électronique avionique. Par exemple un système dit de "Pin programming" en langue anglaise peut être utilisé afin que le calculateur puisse se configurer automatiquement en fonctions des motorisations utilisées.

Avantageusement, la première motorisation peut être agencée de manière escamotable par rapport à un châssis de l'aéronef et configurée pour être remplacée par une autre motorisation de type à combustion ou de type électrique distincte de la première motorisation.

Un tel agencement escamotable de la première motorisation par rapport au châssis de l'aéronef participe à l'aspect modulaire de l'aéronef. En outre, cet agencement escamotable permet de rendre interchangeable la première motorisation en facilitant son remplacement rapide par une autre motorisation plus adaptée à une nouvelle mission à effectuer par l'aéronef et représentant alors une nouvelle première motorisation pour l'aéronef.

Par ailleurs, l'agencement escamotable de la première motorisation par rapport au châssis peut par exemple être réalisé à l'aide de moyens de solidarisation rapides tels que des rails de guidage, des moyens d'indexage en position, des moyens d'encliquetage ou encore des goupilles aptes à faciliter les opérations d'assemblage réversible entre la première motorisation et le châssis de l'aéronef.

Une telle autre motorisation devient la nouvelle première motorisation et peut alors être du même type à combustion ou électrique mais de puissance différente de celle de la première motorisation précédente. Alternativement, cette autre motorisation peut encore être d'un autre type que celui de la première motorisation précédente.

De même, la deuxième motorisation peut être agencée de manière escamotable par rapport à un châssis de l'aéronef et configurée pour être remplacée par une autre motorisation de type à combustion ou de type électrique distincte de la deuxième motorisation.

A l'instar de la première motorisation, un tel agencement escamotable de la deuxième motorisation par rapport au châssis de l'aéronef permet aussi de faciliter le remplacement rapide de cette deuxième motorisation si elle n'est pas adaptée à une nouvelle mission à effectuer par l'aéronef.

Ainsi, l'agencement escamotable de la deuxième motorisation par rapport au châssis peut par exemple être réalisée à l'aide de moyens de solidarisation rapides tels que des rails de guidage, des moyens d'indexage en position, des moyens d'encliquetage ou encore des goupilles aptes à faciliter les opérations d'assemblage réversible entre la deuxième motorisation et le châssis de l'aéronef.

Cette deuxième motorisation peut alors être retirée rapidement et ne pas être remplacée si elle n'est pas utile à la mission à venir ou encore être remplacée par une autre motorisation qui devient la nouvelle deuxième motorisation pour par exemple augmenter l'autonomie de l'aéronef, pour réduire son empreinte acoustique et/ou encore pour augmenter le niveau de sécurité lié à la mission de l'aéronef.

Une telle autre motorisation peut alors être du même type à combustion ou électrique mais de puissance différente de celle de la deuxième motorisation précédente. Alternativement, cette autre motorisation peut encore être d'un autre type que celui de la deuxième motorisation précédente.

En pratique, la première motorisation peut comporter un premier groupe d'au moins deux moteurs de type à combustion ou un premier groupe d'au moins deux moteurs de type électrique.

Autrement dit, la première motorisation peut comporter plusieurs moteurs agencés par exemple mécaniquement en parallèle et permettant de participer simultanément à l'entraînement en rotation du ou des rotor(s) de l'aéronef. En cas de panne de l'un des moteurs de la première motorisation, un autre moteur de la première motorisation peut alors permettre au pilote de l'aéronef de continuer la mission et/ou de poser l'aéronef sans danger.

Selon un exemple avantageux de l'invention, l'aéronef peut comporter un premier boîtier accessoire, le premier boîtier accessoire comportant au moins deux arbres d'entrée reliés mécaniquement respectivement à des arbres de sortie des moteurs du premier groupe, le premier boîtier accessoire comportant un arbre de sortie connecté mécaniquement à la première interface de connexion mécanique.

En d'autres termes, un tel premier boîtier accessoire peut permettre d'adapter la vitesse des arbres de sortie des moteurs du premier groupe afin que l'arbre d'entrée de la boite de transmission principale de puissance soit entraîné à une vitesse de rotation comprise dans une plage de vitesses prédéterminée.

Par exemple, le premier boîtier accessoire peut comporter un réducteur de vitesse pour adapter et réduire une vitesse de rotation des arbres de sortie des moteurs de type électrique du premier groupe.

En effet, les arbres de sortie des moteurs de type électrique de la première motorisation peuvent être mis en rotation à une vitesse de rotation très supérieure aux vitesses de rotation des arbres de sortie des moteurs de type à combustion. Il peut donc être avantageux de réduire cette vitesse de rotation des arbres de sortie des moteurs de type électrique préalablement à la liaison avec la première interface de connexion mécanique.

De la même manière, la deuxième motorisation peut comporter un second groupe d'au moins deux moteurs de type à combustion ou un second groupe d'au moins deux moteurs de type électrique.

Ainsi, la deuxième motorisation peut également comporter plusieurs moteurs agencés par exemple mécaniquement en parallèles de façon à pouvoir participer simultanément à l'entraînement en rotation du ou des rotor(s) de l'aéronef. En cas de panne de l'un des moteurs de la deuxième motorisation, un autre moteur de la deuxième motorisation peut alors permettre au pilote de l'aéronef de continuer la mission et/ou de poser l'aéronef sans danger.

Selon un exemple avantageux de l'invention, l'aéronef peut comporter un second boîtier accessoire, le second boîtier accessoire comportant au moins deux arbres d'entrée reliés mécaniquement respectivement à des arbres de sortie des moteurs du second groupe, le second boîtier accessoire comportant un arbre de sortie connecté mécaniquement à la seconde interface de connexion mécanique.

En d'autres termes, un tel second boîtier accessoire peut permettre d'adapter la vitesse de sortie des arbres de sortie des moteurs du second groupe afin que l'arbre d'entrée de la boite de transmission principale de puissance soit entraîné à une vitesse de rotation comprise dans une plage de vitesses prédéterminée.

Par exemple, le second boîtier accessoire peut comporter un réducteur de vitesse pour adapter et réduire une vitesse de rotation des arbres de sortie des moteurs de type électrique du second groupe.

Comme précédemment, les arbres de sortie des moteurs de type électrique de la deuxième motorisation peuvent être mis en rotation à une vitesse de rotation très supérieure aux vitesses de rotation des arbres de sortie des moteurs de type à combustion. Il peut donc être avantageux de réduire cette vitesse de rotation des arbres de sortie des moteurs de type électrique préalablement à la liaison avec la seconde interface de connexion mécanique.

Avantageusement, l'aéronef peut comporter un premier compartiment de stockage permettant de stocker une première source d'énergie combustible, le premier compartiment de stockage étant connecté hydrauliquement à la (ou aux) motorisation(s) pour alimenter la (ou les) motorisation(s) avec la première source d'énergie combustible, le premier compartiment de stockage étant en tout ou partie escamotable par rapport à un châssis de l'aéronef et configuré pour être remplacé par un second compartiment de stockage d'une seconde source d'énergie électrique distincte de la première source d'énergie combustible.

Ainsi, un tel agencement escamotable du premier compartiment de stockage par rapport au châssis de l'aéronef participe également à l'aspect modulaire de l'aéronef. En outre, cet agencement escamotable permet de rendre facilement interchangeable le premier compartiment de stockage en facilitant son remplacement rapide par un second compartiment de stockage d'une seconde source d'énergie électrique plus adaptée à une nouvelle mission à effectuer par l'aéronef.

De façon analogue, l'aéronef peut comporter un premier compartiment de stockage permettant de stocker une première source d'énergie électrique, le premier compartiment de stockage étant connecté électriquement à la (ou aux) motorisation(s) pour alimenter la (ou les) motorisation(s) avec la première source d'énergie électrique, le premier compartiment de stockage étant en tout ou partie escamotable par rapport à un châssis de l'aéronef et configuré pour être remplacé par un second compartiment de stockage d'une seconde source d'énergie combustible distincte de la première source d'énergie électrique.

Comme précédemment pour les motorisations, l'agencement escamotable du premier compartiment de stockage par rapport au châssis peut par exemple comporter des moyens de solidarisation rapides tels que des rails de guidage, des moyens d'indexage en position, des moyens d'encliquetage ou encore des goupilles aptes à faciliter les opérations d'assemblage réversible entre le premier compartiment de stockage et le châssis de l'aéronef.

La présente invention a aussi pour objet le procédé de préparation d'un aéronef de type modulaire tel que décrit ci-dessus à une mission spécifique.

Selon l'invention, un tel procédé est remarquable en ce qu'il comporte d'une part au moins une étape préliminaire choisie parmi le groupe comportant les étapes préliminaires suivantes :
- détermination des besoins en autonomie de l'aéronef pour effectuer la mission,
- détermination des besoins en performance de l'aéronef pour effectuer la mission,
- détermination des contraintes liées à un niveau de sécurité de la mission,
- détermination des contraintes liées à un niveau de nuisances sonores maximales admissibles pour la mission,
et d'autre part les étapes suivantes :
- génération d'une liste d'au moins deux motorisations de type à combustion et/ou de type électrique, ladite liste étant conditionnée par l' (ou les) étape(s) préliminaire(s) et étant adaptée spécifiquement à la mission de l'aéronef,
- choix de la (ou des) motorisation(s) de type à combustion ou de type électrique parmi la liste d'au moins deux motorisations de type à combustion et/ou de type électrique,
- installation de la (ou les) motorisation(s) sur le châssis de l'aéronef,
- connexion électrique pour connecter électriquement la (ou les) motorisation(s) avec le système électronique avionique d'aide au pilotage de l'aéronef, et
- connexion mécanique pour connecter mécaniquement la (ou les) motorisation(s) avec la boite de transmission principale de puissance.

Autrement dit, le procédé de préparation d'un aéronef de type modulaire comporte au moins une étape préliminaire permettant de déterminer au moins un besoin ou une contrainte d'une mission de l'aéronef. En outre, des besoins en performance peuvent par exemple se rapporter à l'altitude maximale à atteindre par l'aéronef lors de la mission ou encore la masse maximale de l'aéronef au décollage pour pouvoir effectuer la mission.

L'étape de génération d'une liste d'au moins deux motorisations s'effectue à partir des étapes préliminaires de détermination. Elle permet de pondérer et de donner plus ou moins d'importance aux différents besoins et aux différentes contraintes de la mission. L'étape de génération d'une liste d'au moins deux motorisations permet alors de donner une ou plusieurs solutions de motorisation plus ou moins adaptée(s) à la mission.

Par exemple, un calculateur peut appliquer une ou plusieurs lois pour étudier une liste élargie de plusieurs motorisations et la limiter afin de générer la liste d'au moins deux motorisations permettant d'atteindre les objectifs fixés à l'aide des besoins et contraintes liés à la mission.

Le choix peut alors correspondre à la sélection d'une ou plusieurs motorisation(s) parmi la liste de propositions effectuée à l'étape précédente de génération. La (ou les) motorisation(s) choisie(s) peu(ven)t alors correspondre en une première motorisation de type à combustion utilisée seule, une première motorisation de type à combustion combinée avec une deuxième motorisation de type à combustion, une première motorisation de type à combustion combinée avec une deuxième motorisation de type électrique, une première motorisation de type électrique utilisée seule ou encore une première motorisation de type électrique combinée avec une deuxième motorisation de type électrique.

En outre le choix peut également être effectué parmi une (ou des) motorisation(s) d'un même type à combustion ou électrique mais présentant par exemple des puissances spécifiques et/ou des masses distinctes l'une de l'autre.

De cette manière, un opérateur peut posséder au moins un aéronef modulaire et éventuellement une flotte d'aéronefs modulaires dont la (ou les) motorisation(s) peu(ven)t être commune(s) et interchangeable(s). A chaque mission d'un des aéronefs de la flotte, il peut alors mettre en œuvre le procédé de préparation et choisir alors dans un magasin de stockage la (ou les) motorisation(s) la (ou les) plus adaptée(s) à la mission en préparation.

Une fois l'étape du choix effectuée, l'utilisateur ou un opérateur procède alors à l'installation de la (ou des) motorisation(s) sur le châssis de l'aéronef. Une telle installation est alors réalisée avec des moyens de solidarisation réversible aptes à être facilement et rapidement mis en place et/ou retirés.

Enfin, l'utilisateur ou l'opérateur procède aux connexions électriques et mécaniques de la (ou des) motorisation(s) avec d'une part le système électronique avionique et d'autre part la boite de transmission principale de puissance.

L'aéronef est alors prêt pour effectuer une mission avec la (ou les) motorisation(s) spécifiquement adaptée(s) en fonction des besoins et contraintes de cette mission.

Avantageusement, le procédé peut comporter une étape de solidarisation pour solidariser sur le châssis de l'aéronef un compartiment de stockage d'une source d'énergie combustible ou électrique adaptée à la (ou aux) motorisation(s) et une étape de connexion hydraulique ou électrique pour connecter le compartiment de stockage avec la (ou les) motorisation(s).

En effet, en fonction du choix effectué à l'étape du choix de la (ou des) motorisation(s), il peut être également utile ou nécessaire de solidariser un compartiment de stockage d'une source d'énergie combustible/électrique. De même que pour la (ou les) motorisation(s), une telle solidarisation du compartiment de stockage est alors réalisée avec des moyens de solidarisation réversible aptes à être facilement et rapidement mis en place.

En outre, un tel compartiment de stockage d'une source d'énergie combustible/électrique une fois mis en place et solidarisé avec le châssis de l'aéronef, est également connecté hydrauliquement et/ou électriquement avec la (ou les) motorisation(s) et éventuellement avec le système électronique avionique de l'aéronef. Ce compartiment de stockage peut par exemple comporter un réservoir de carburant ou alternativement une batterie de stockage d'une énergie électrique.

L'invention et ses avantages apparaîtront avec plus de détails dans le cadre de la description qui suit avec des exemples donnés à titre illustratif en référence aux figures annexées qui représentent :
- la figure 1, un schéma en vue de côté d'un aéronef conforme à l'invention,
- les figures 2 à 6, des schémas illustrant différentes variantes de motorisation d'un aéronef conforme à l'invention,
- la figure 7, un logigramme selon un premier exemple de réalisation d'un procédé de préparation d'un aéronef de type modulaire conforme à l'invention, et
- la figure 8, un logigramme selon un second exemple de réalisation d'un procédé de préparation d'un aéronef de type modulaire conforme à l'invention.

Les éléments présents dans plusieurs figures distinctes peuvent être affectés d'une seule et même référence.

Comme déjà indiqué, l'invention concerne ainsi un aéronef 1 de type modulaire adaptable en fonction d'une mission à effectuer.

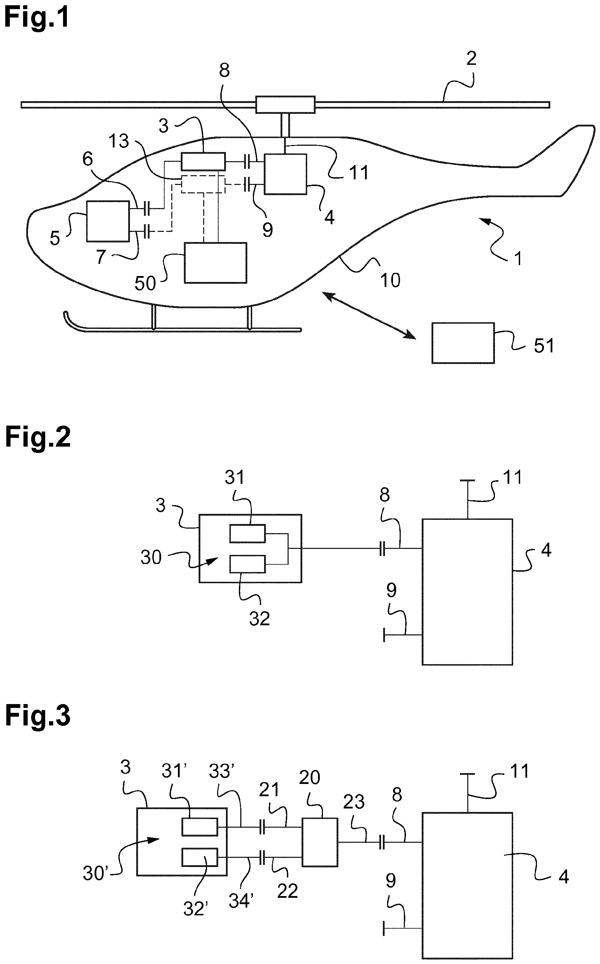

Tel que représenté à la figure 1, un tel aéronef 1 comporte alors au moins un rotor 2 apte à réaliser en tout ou partie une propulsion et/ou une sustentation de l'aéronef 1 dans les airs. En outre l'aéronef comporte également au moins une première motorisation 3 et éventuellement une deuxième motorisation 13, chaque motorisation étant de type à combustion ou de type électrique et une boite de transmission principale de puissance 4 pour transmettre mécaniquement un couple moteur généré par la (ou les) motorisation(s) 3, 13 au(x) rotor(s) 2.

Ainsi, une telle boite de transmission principale de puissance 4 comporte au moins un arbre de sortie 11 apte à entraîner en rotation le(s) rotor(s) 2. En revanche en entrée, la boite de transmission principale de puissance 4 comporte au moins deux interfaces de connexion mécanique 8 et 9 permettant de relier mécaniquement la boite de transmission principale de puissance 4 à chacune des motorisations 3, 13.

En outre avant vol, une première interface de connexion mécanique 8 est alors nécessairement connectée à la première motorisation 3. En revanche, une deuxième interface de connexion mécanique 9 peut quant à elle être laissée libre ou être connectée à la deuxième motorisation 13.

L'aéronef 1 comporte également un système électronique avionique 5 d'aide au pilotage de l'aéronef 1. Un tel système électronique avionique 5 est alors relié électriquement à la (ou aux) motorisation(s) grâce à au moins deux interfaces de connexion électrique 6 et 7. Ainsi, une première interface de connexion électrique 6 est connectée à la première motorisation 3 qui peut être de type à combustion ou de type électrique et une deuxième interface de connexion électrique 7 peut être laissée libre ou alternativement être connectée à la deuxième motorisation 13 de type à combustion ou de type électrique.

Par ailleurs, le système électronique avionique 5 peut être configuré pour automatiquement adapter l'aide au pilotage de l'aéronef 1 en fonction du nombre, de la puissance et de la nature de la (ou des) motorisation(s) 3, 13 connecté(s) aux interfaces de connexion électrique 6 et 7.

L'aéronef 1 peut également comporter un premier compartiment de stockage 50 d'une première source d'énergie combustible/électrique qui est alors connecté hydrauliquement/électriquement à la (ou aux) motorisation(s) 3, 13. Un tel compartiment de stockage 50 permet alors d'alimenter la (ou les) motorisation(s) 3, 13 avec la première source d'énergie combustible/électrique. Cependant, ce premier compartiment de stockage 50 peut être en tout ou partie escamotable par rapport à un châssis 10 de l'aéronef 1.

Ainsi, un tel premier compartiment de stockage 50 peut être configuré pour être remplacé rapidement et simplement par un second compartiment de stockage 51 d'une seconde source d'énergie électrique/combustible distincte de la première source d'énergie combustible/électrique.

De même, la première motorisation 3 et/ou la deuxième motorisation 13 peu(ven)t être agencée(s) de manière escamotable par rapport au châssis 10 de l'aéronef 1.

Ainsi, la première motorisation 3 et/ou la deuxième motorisation 13 peu(ven)t être configurée(s) pour être remplacée, voire seulement retirée et non remplacée pour la deuxième motorisation 13, rapidement et facilement par une autre motorisation de type à combustion ou de type électrique distincte de la première motorisation 3 et/ou de la deuxième motorisation 13.

Tel que représenté aux figures 2 et 3, l'aéronef 1 peut alors être équipé d'une seule motorisation 3 connectée mécaniquement à la première interface de connexion mécanique 8. La seconde interface de connexion mécanique 9 est quant à elle laissée libre.

En outre selon une première variante de motorisation de l'aéronef 1 telle que représentée à la figure 2, la première motorisation 3 peut comporter un premier groupe 30 d'au moins deux moteurs 31 et 32 de type à combustion et aucune deuxième motorisation.

Selon une seconde variante de motorisation de l'aéronef 1 telle que représentée à la figure 3, la première motorisation 3 peut comporter un premier groupe 30' d'au moins deux moteurs 31' et 32' de type électrique. De plus, pour permettre de réduire la vitesse de rotation des arbres de sortie 33' et 34' de la première motorisation 3, l'aéronef 1, voire la première motorisation 3, peut alors également comporter un premier boîtier accessoire 20 muni de deux arbres d'entrée 21 et 22. Ces arbres d'entrée 21 et 22 sont connectés mécaniquement respectivement aux arbres de sortie 33' et 34' des deux moteurs 31' et 32' de type électrique.

Au surplus, le premier boîtier accessoire 20 comporte également un arbre de sortie 23 connecté mécaniquement à la première interface de connexion mécanique 8.

De plus, la première motorisation 3 et le premier boîtier accessoire 20 peuvent avantageusement former un ensemble monolithique interchangeable avec une autre motorisation par exemple de type à combustion devenant alors la nouvelle première motorisation de l'aéronef 1.

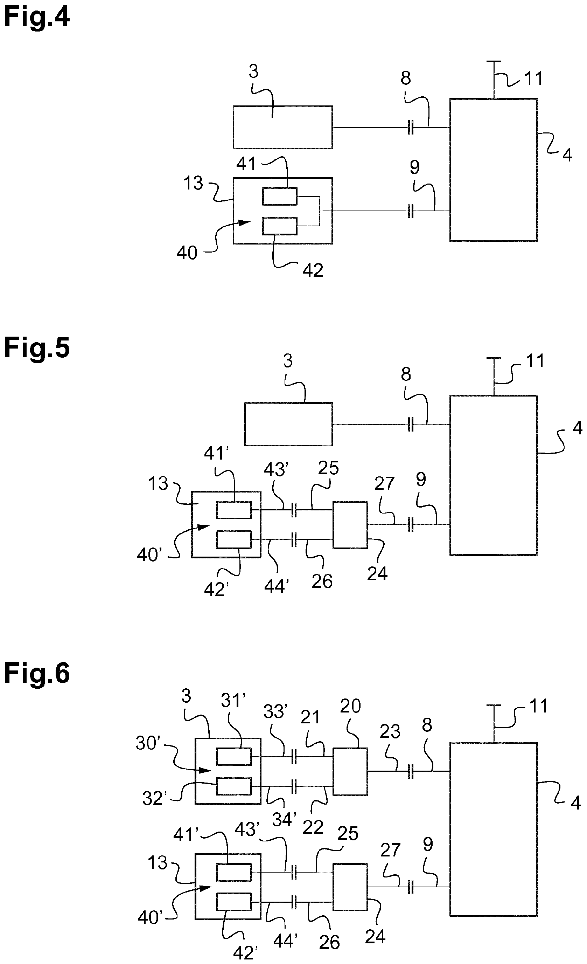

Tel que représenté aux figures 4 à 6, l'aéronef 1 peut également être équipé d'une première motorisation 3 connectée mécaniquement à la première interface de connexion mécanique 8 et d'une deuxième motorisation 13 connectée mécaniquement à la seconde interface de connexion mécanique 9. Bien entendu, comme déjà évoqué de telles première et deuxième motorisations 3, 13 sont par ailleurs connectées électriquement au système électronique avionique 5.

En outre telle que représentée aux figures 4 et 5, la première motorisation 3 peut comporter un unique moteur de type à combustion.

En outre selon une troisième variante de motorisation de l'aéronef 1 telle que représentée à la figure 4, la deuxième motorisation 13 peut quant à elle comporter un second groupe 40 d'au moins deux moteurs 41 et 42 de type à combustion.

Selon une quatrième variante de motorisation de l'aéronef 1 telle que représentée à la figure 5, la deuxième motorisation 13 peut également comporter un second groupe 40' d'au moins deux moteurs 41' et 42' de type électrique. Dans ce cas, pour permettre de réduire la vitesse de rotation des arbres de sortie 43' et 44' de la deuxième motorisation 13, l'aéronef 1 peut alors également comporter un second boîtier accessoire 24 muni de deux arbres d'entrée 21 et 22. Ces arbres d'entrée 21 et 22 sont connectés mécaniquement respectivement aux deux arbres de sortie 43' et 44' des deux moteurs 41' et 42' de type électrique.

Comme précédemment, le second boîtier accessoire 24 comporte également un arbre de sortie 27 connecté dans ce cas mécaniquement à la seconde interface de connexion mécanique 9.

Enfin selon une cinquième variante de motorisation de l'aéronef 1 telle que représentée à la figure 6, la première motorisation 3 peut comporter un premier groupe 30' d'au moins deux moteurs 31' et 32' de type électrique et la deuxième motorisation 13 peut également comporter un second groupe 40' d'au moins deux moteurs 41' et 42' de type électrique

Dans ce cas pour permettre de réduire la vitesse de rotation des arbres de sortie de la première motorisation 3, l'aéronef 1 peut alors également comporter un premier boîtier accessoire 20 muni de deux arbres d'entrée 21 et 22. Ces arbres d'entrée 21 et 22 sont connectés mécaniquement respectivement aux deux arbres de sortie 33' et34' des deux moteurs 31' et 32' de type électrique de la première motorisation. Le premier boîtier accessoire 20 comporte également un arbre de sortie 23 connecté mécaniquement à la première interface de connexion mécanique 8.

De même pour permettre de réduire la vitesse de rotation des arbres de sortie 43' et 44' de la deuxième motorisation 13, l'aéronef 1 peut alors également comporter un second boîtier accessoire 24 muni de deux arbres d'entrée 21 et 22. Ces arbres d'entrée 21 et 22 sont connectés mécaniquement respectivement aux deux arbres de sortie 43' et 44' des deux moteurs 41' et 42' de type électrique de la deuxième motorisation. Le second boîtier accessoire 24 comporte également un arbre de sortie 27 connecté mécaniquement à la seconde interface de connexion mécanique 9.

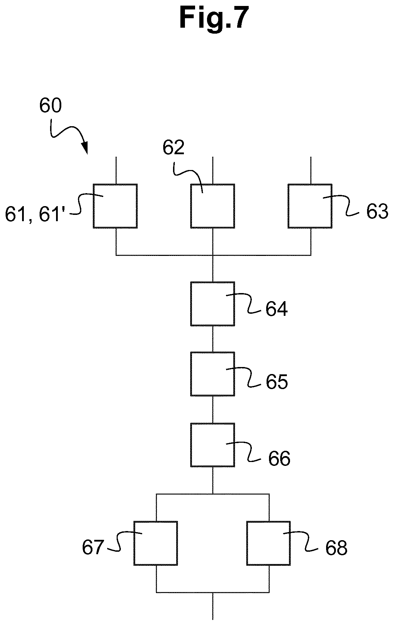

Telle que représentée à la figure 7, l'invention concerne également un procédé de préparation 60 d'un aéronef 1 de type modulaire précédemment décrit à une mission spécifique.

Ainsi, un premier exemple de réalisation d'un tel procédé de préparation comporte alors une première étape de détermination 61 des besoins en autonomie et/ou de détermination 61' des besoins en performance de l'aéronef 1 pour effectuer la mission, une deuxième étape de détermination 62 des contraintes liées à un niveau de sécurité de la mission et une troisième étape de détermination 63 des contraintes liées à un niveau de nuisances sonores maximales admissibles pour la mission.

Telles que représentées, ces trois étapes de détermination 61, 61', 62 et 63 peuvent être opérées simultanément en parallèle mais elles peuvent également être mises en œuvre successivement l'une après l'autre sans ordre prédéfini.

En outre, selon d'autres exemples non représentés, une seule de ces trois étapes de détermination 61, 61', 62 et 63 peut être mis en œuvre indépendamment ou d'autres étapes préliminaires de détermination non représentées peuvent également être mises en œuvre par un tel procédé 60. Par exemple, le procédé 60 peut également comporter une étape de détermination d'un nombre minimal de personnes à transporter par l'aéronef 1 ou encore une étape de détermination d'une charge maximale de marchandises que l'aéronef 1 peut déplacer.

Le procédé 60 comporte alors ensuite une étape de génération 64 permettant de générer une liste d'au moins deux motorisations en fonction des besoins et des contraintes en autonomie ou liées au niveau de sécurité de la mission puis une étape de choix 65 de la (ou des) motorisation(s) 3, 13 de type à combustion ou de type électrique parmi la liste des au moins deux motorisations de type à combustion et/ou de type électrique. Une telle liste peut être effectuée à partir d'un catalogue fourni par le constructeur de l'aéronef ou plus simplement à partir des motorisations effectivement disponibles et présentes dans un lieu de stockage d'une flotte d'aéronefs et de motorisations appartenant à un opérateur.

Par exemple un tel catalogue ou une telle liste de motorisations disponibles peut comporter au moins une des motorisations suivantes :
- un moteur de type électrique,
- un moteur de type à combustion,
- deux moteurs de type électrique et
- deux moteurs de type à combustion.

Bien entendu, un tel aéronef peut alors être équipé de plus de deux moteurs de chaque type précédemment décrit.

En outre, chacune des motorisations peut également être déclinée en une ou plusieurs motorisations, chaque motorisation étant associée par exemple à une puissance développée spécifique.

Une telle étape de choix 65 est ainsi spécifique à la mission de l'aéronef 1. Enfin, le procédé 60 comporte une étape d'installation 66 de la (ou des) motorisation(s) 3, 13 choisie(s) sur le châssis 10 de l'aéronef 1.

Le procédé 60 comporte alors également une étape de connexion électrique 67 pour connecter électriquement chaque motorisation 3, 13 choisie(s) avec le système électronique avionique 5 d'aide au pilotage de l'aéronef 1 et une étape de connexion mécanique 68 pour connecter mécaniquement chaque motorisation 3, 13 choisie(s) avec la boite de transmission principale de puissance 4.

Telles que représentées, ces deux étapes de connexion 67, 68 peuvent être opérées simultanément en parallèle ou encore successivement l'une après l'autre sans ordre prédéfini.

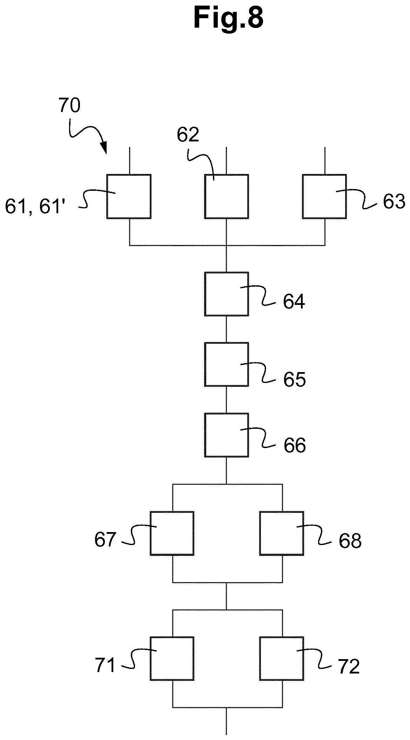

Tel que représenté à la figure 8, un deuxième exemple de réalisation du procédé 70 peut comporter en plus des différentes étapes du procédé 60, des étapes supplémentaires et notamment une étape de solidarisation 71 permettant de solidariser sur le châssis 10 de l'aéronef 1 un compartiment de stockage 51 d'une source d'énergie combustible ou électrique. Un tel compartiment de stockage 51 peut alors être rapporté sur le châssis 10 en remplacement d'un compartiment de stockage 50 agencé initialement sur l'aéronef.

En outre, un tel compartiment de stockage 51 permet de stocker une source d'énergie combustible ou électrique adaptée à la (ou aux) motorisation(s) 3, 13 choisie(s).

Dans ce cas, le procédé 70 comporte alors également une étape de connexion hydraulique ou électrique 72 permettant de connecter le compartiment de stockage 51 avec la (ou les) motorisation(s) 3, 13 choisie(s).

Telles que représentées, ces deux étapes de solidarisation 71 de connexion hydraulique ou électrique 72 peuvent être opérées simultanément en parallèle ou encore successivement l'une après l'autre sans ordre prédéfini.

Naturellement, la présente invention est sujette à de nombreuses variations quant à sa mise en œuvre.

## Revendications

1. Aéronef (1) de type modulaire comportant :
- au moins un rotor (2) apte à réaliser en tout ou partie une propulsion et/ou une sustentation dudit aéronef (1),
- au moins une motorisation (3, 13) de type à combustion ou de type électrique,
- une boite de transmission principale de puissance (4), pour transmettre mécaniquement un couple moteur généré par ladite au moins une motorisation (3, 13) audit au moins un rotor (2), et
- un système électronique avionique (5) d'aide au pilotage dudit aéronef (1),
**caractérisé en ce que** ledit aéronef (1) comporte :
- au moins deux interfaces de connexion électrique (6, 7) constamment connectées électriquement audit système électronique avionique (5), une première interface de connexion électrique (6) reliant électriquement le système électronique avionique (5) à une première motorisation (3) de ladite au moins une motorisation (3, 13) et une deuxième interface de connexion électrique (7) apte à être laissée libre ou à relier électriquement le système électronique avionique à une deuxième motorisation (13) de ladite au moins une motorisation (3, 13), et
- au moins deux interfaces de connexion mécanique (8, 9) constamment connectées mécaniquement avec ladite boite de transmission principale de puissance (4), une première interface de connexion mécanique (8) reliant mécaniquement ladite boite de transmission principale de puissance (4) à ladite première motorisation (3) et une deuxième interface de connexion mécanique (9) apte à être laissée libre ou à relier mécaniquement ladite boite de transmission principale de puissance (4) à ladite deuxième motorisation (13),
et **en ce que** ledit système électronique avionique (5) est configuré pour réaliser automatiquement ladite aide au pilotage dudit aéronef (1) d'une part lorsque seulement ladite première motorisation (3) est connectée électriquement à ladite première interface de connexion électrique (6) et d'autre part lorsqu'à la fois ladite première motorisation (3) est connectée électriquement à ladite première interface de connexion électrique (6) et ladite deuxième motorisation (13) est connectée électriquement à ladite deuxième interface de connexion électrique (7).

2. Aéronef selon la revendication 1, **caractérisé en ce que** ladite première motorisation (3) est agencée de manière escamotable par rapport à un châssis (10) dudit aéronef (1) et configurée pour être remplacée par une autre motorisation de type à combustion ou de type électrique distincte de ladite première motorisation (3).

3. Aéronef selon l'une quelconque des revendications 1 à 2, **caractérisé en ce que** ladite deuxième motorisation (13) est agencée de manière escamotable par rapport à un châssis (10) dudit aéronef (1) et configurée pour être remplacée par une autre motorisation de type à combustion ou de type électrique distincte de ladite deuxième motorisation (13).

4. Aéronef selon l'une quelconque des revendications 1 à 3, **caractérisé en ce que** ladite première motorisation (3) comporte un premier groupe (30) d'au moins deux moteurs (31 et 32) de type à combustion ou un premier groupe (30') d'au moins deux moteurs (31' et 32') de type électrique.

5. Aéronef selon la revendication 4, **caractérisé en ce que** ledit aéronef (1) comporte un premier boîtier accessoire (20), ledit premier boîtier accessoire (20) comportant au moins deux arbres d'entrée (21 et 22) reliés mécaniquement respectivement à des arbres de sortie (33' et 34') desdits au moins deux moteurs (31' et 32') dudit premier groupe (30, 30'), ledit premier boîtier accessoire (20) compotant un arbre de sortie (23) connecté mécaniquement à ladite première interface de connexion mécanique (8).

6. Aéronef selon la revendication 5, **caractérisé en ce que** ledit premier boîtier accessoire (20) comporte un réducteur de vitesse pour adapter et réduire une vitesse de rotation desdits arbres de sortie (33' et 34') desdits au moins deux moteurs (31' et 32') de type électrique dudit premier groupe (30').

7. Aéronef selon l'une quelconque des revendications 1 à 6, **caractérisé en ce que** ladite deuxième motorisation (13) comporte un second groupe (40) d'au moins deux moteurs (41 et 42) de type à combustion ou un second groupe (40') d'au moins deux moteurs (41' et 42') de type électrique.

8. Aéronef selon la revendication 7, **caractérisé en ce que** ledit aéronef (1) comporte un second boîtier accessoire (24), ledit second boîtier accessoire (24) comportant au moins deux arbres d'entrée (25 et 26) reliés mécaniquement respectivement à des arbres de sortie (43' et 44') desdits au moins deux moteurs (41 et 42, 41' et 42') dudit second groupe (40, 40'), ledit second boîtier accessoire (24) comportant un arbre de sortie (27) connecté mécaniquement à ladite seconde interface de connexion mécanique (9).

9. Aéronef selon la revendication 8, **caractérisé en ce que** ledit second boîtier accessoire (24) comporte un réducteur de vitesse pour adapter et réduire une vitesse de rotation desdits arbres de sortie (43' et 44') desdits au moins deux moteurs (41' et 42') de type électrique dudit second groupe (40').

10. Aéronef selon l'une quelconque des revendications 1 à 9, **caractérisé en ce que** ledit aéronef (1) comporte un premier compartiment de stockage (50) permettant de stocker une première source d'énergie combustible, ledit premier compartiment de stockage (50) étant connecté hydrauliquement à ladite au moins une motorisation (3, 13) pour alimenter ladite au moins une motorisation (3, 13) avec ladite première source d'énergie combustible, ledit premier compartiment de stockage (50) étant en tout ou partie escamotable par rapport à un châssis (10) dudit aéronef (1) et configuré pour être remplacé par un second compartiment de stockage (51) d'une seconde source d'énergie électrique distincte de ladite première source d'énergie combustible.

11. Aéronef selon l'une quelconque des revendications 1 à 9, **caractérisé en ce que** ledit aéronef (1') comporte un premier compartiment de stockage (50') permettant de stocker une première source d'énergie électrique, ledit premier compartiment de stockage (50') étant connecté électriquement à ladite au moins une motorisation (3, 13) pour alimenter ladite au moins une motorisation (3, 13) avec ladite première source d'énergie électrique, ledit premier compartiment de stockage (50') étant en tout ou partie escamotable par rapport à un châssis (10') dudit aéronef (1') et configuré pour être remplacé par un second compartiment de stockage (51') d'une seconde source d'énergie combustible distincte de ladite première source d'énergie électrique.

12. Procédé de préparation (60, 70) d'un aéronef (1) de type modulaire selon l'une quelconque des revendications 1 à 11 à une mission spécifique, **caractérisé en ce que** ledit procédé (60, 70) comporte d'une part au moins une étape préliminaire choisie parmi le groupe comportant les étapes préliminaires suivantes :
- détermination (61) des besoins en autonomie dudit aéronef (1) pour effectuer ladite mission,
- détermination (61') des besoins en performance dudit aéronef pour effectuer ladite mission,
- détermination (62) des contraintes liées à un niveau de sécurité de ladite mission,
- détermination (63) des contraintes liées à un niveau de nuisances sonores maximales admissibles pour ladite mission,
et d'autre part les étapes suivantes :
- génération (64) d'une liste d'au moins deux motorisations de type à combustion et/ou de type électrique, ladite liste étant conditionnée par ladite au moins une étape préliminaire et étant adaptée spécifiquement à ladite mission dudit aéronef (1),
- choix (65) de ladite au moins une motorisation (3, 13) de type à combustion ou de type électrique parmi ladite liste d'au moins deux motorisations de type à combustion et/ou de type électrique, et
- installation (66) de ladite au moins une motorisation (3, 13) choisie sur ledit châssis (10) dudit aéronef (1),
- connexion électrique (67) pour connecter électriquement ladite au moins une motorisation (3, 13) choisie avec ledit système électronique avionique (5) d'aide au pilotage dudit aéronef (1), et
- connexion mécanique (68) pour connecter mécaniquement ladite au moins une motorisation (3, 13) choisie avec ladite boite de transmission principale de puissance (4).

13. Procédé selon la revendication 12, **caractérisé en ce que** ledit procédé (70) comporte une étape de solidarisation (71) pour solidariser sur ledit châssis (10) dudit aéronef (1) un compartiment de stockage (51) d'une source d'énergie combustible ou électrique adaptée à ladite au moins une motorisation (3, 13) choisie et une étape de connexion hydraulique ou électrique (72) pour connecter ledit compartiment de stockage (51) avec ladite au moins une motorisation (3, 13) choisie.

## Patentansprüche

1. Modulares Luftfahrzeug (1) mit:
- mindestens einem Rotor (2), der geeignet ist, ganz oder teilweise einen Antrieb und/oder einen Auftrieb des Luftfahrzeugs (1) zu realisieren,
- einem oder mehreren Triebwerken (3, 13) vom Verbrennungstyp oder vom Elektrotyp,
- einem Hauptleistungsübertragungsgetriebe (4), um ein von den ein oder mehreren Triebwerken (3, 13) erzeugtes Antriebsdrehmoment mechanisch auf den mindestens einen Rotor (2) zu übertragen, und
- einem elektronischen Avioniksystem (5) zur Unterstützung der Steuerung des Luftfahrzeugs (1),
**dadurch gekennzeichnet, dass** das Luftfahrzeug (1) umfasst:
- mindestens zwei elektrische Verbindungsschnittstellen (6, 7), die ständig elektrisch mit dem elektronischen Avioniksystem (5) verbunden sind, wobei eine erste elektrische Verbindungsschnittstelle (6) das elektronische Avioniksystem (5) elektrisch mit einem ersten Triebwerk (3) der ein oder mehreren Triebwerke (3, 13) verbindet und eine zweite elektrische Verbindungsschnittstelle (7) geeignet ist, unbelegt zu bleiben oder das elektronische Avioniksystem elektrisch mit einem zweiten Triebwerk (13) der ein oder mehreren Triebwerke (3, 13) zu verbinden, und
- mindestens zwei mechanische Verbindungsschnittstellen (8, 9), die ständig mechanisch mit dem Hauptleistungsübertragungsgetriebe (4) verbunden sind, wobei eine erste mechanische Verbindungsschnittstelle (8) das Hauptleistungsübertragungsgetriebe (4) mechanisch mit dem ersten Triebwerk (3) verbindet und eine zweite mechanische Verbindungsschnittstelle (9) geeignet ist, unbelegt zu bleiben oder das Hauptleistungsübertragungsgetriebe (4) mechanisch mit dem zweiten Triebwerk (13) zu verbinden,
und dass das elektronische Avioniksystem (5) konfiguriert ist, um automatisch die Unterstützung bei der Steuerung des Flugzeugs (1) durchzuführen, einerseits wenn nur das erste Triebwerk (3) elektrisch mit der ersten elektrischen Verbindungsschnittstelle (6) verbunden ist und andererseits wenn sowohl das erste Triebwerk (3) elektrisch mit der ersten elektrischen Verbindungsschnittstelle (6) verbunden ist als auch das zweite Triebwerk (13) elektrisch mit der zweiten elektrischen Verbindungsschnittstelle (7) verbunden ist.

2. Luftfahrzeug nach Anspruch 1, **dadurch gekennzeichnet, dass** das erste Triebwerk (3) in Bezug auf ein Chassis (10) des Luftfahrzeugs (1) ausrückbar angeordnet und konfiguriert ist, um durch ein anderes Triebwerk vom Verbrennungstyp oder vom elektrischen Typ ersetzt zu werden, das vom ersten Triebwerk (3) verschieden ist.

3. Luftfahrzeug nach einem der Ansprüche 1 bis 2, **dadurch gekennzeichnet, dass** das zweite Triebwerk (13) in Bezug auf ein Chassis (10) des Luftfahrzeugs (1) ausrückbar angeordnet und konfiguriert ist, um durch ein anderes Triebwerk vom Verbrennungstyp oder vom elektrischen Typ ersetzt zu werden, das von dem zweiten Triebwerk (13) verschieden ist.

4. Luftfahrzeug nach einem der Ansprüche 1 bis 3, **dadurch gekennzeichnet, dass** das erste Triebwerk (3) eine erste Gruppe (30) von mindestens zwei Motoren (31 und 32) vom Verbrennungstyp oder eine erste Gruppe (30') von mindestens zwei Motoren (31' und 32') vom Elektrotyp umfasst.

5. Luftfahrzeug nach Anspruch 4, **dadurch gekennzeichnet, dass** das Luftfahrzeug (1) ein erstes Hilfsgetriebe (20) umfasst, wobei das erste Hilfsgetriebe (20) mindestens zwei Eingangswellen (21 und 22) umfasst, die jeweils mechanisch mit Ausgangswellen (33' und 34') der mindestens zwei Motoren (31' und 32') der ersten Gruppe (30, 30') verbunden sind, wobei das erste Hilfsgetriebe (20) eine Ausgangswelle (23) umfasst, die mechanisch mit der ersten mechanischen Verbindungsschnittstelle (8) verbunden ist.

6. Luftfahrzeug nach Anspruch 5, **dadurch gekennzeichnet, dass** das erste Hilfsgetriebe (20) ein Untersetzungsgetriebe zum Anpassen und Reduzieren einer Drehgeschwindigkeit der Ausgangswellen (33' und 34') der mindestens zwei Motoren (31' und 32') vom Elektrotyp der ersten Gruppe (30') umfasst.

7. Luftfahrzeug nach einem der Ansprüche 1 bis 6, **dadurch gekennzeichnet, dass** das zweite Triebwerk (13) eine zweite Gruppe (40) von mindestens zwei Motoren (41 und 42) vom Verbrennungstyp oder eine zweite Gruppe (40') von mindestens zwei Motoren (41 ' und 42') vom Elektrotyp umfasst.

8. Luftfahrzeug nach Anspruch 7, **dadurch gekennzeichnet, dass** das Luftfahrzeug (1) ein zweites Hilfsgetriebe (24) aufweist, wobei das zweite Hilfsgetriebe (24) mindestens zwei Eingangswellen (25 und 26) aufweist, die jeweils mechanisch mit Ausgangswellen (43' und 44') der mindestens zwei Motoren (41 und 42, 41' und 42') der zweiten Gruppe (40, 40') verbunden sind, und wobei das zweite Hilfsgetriebe (24) eine Ausgangswelle (27) aufweist, die mechanisch mit der zweiten mechanischen Verbindungsschnittstelle (9) verbunden ist.

9. Luftfahrzeug nach Anspruch 8, **dadurch gekennzeichnet, dass** das zweite Zusatzgetriebe (24) ein Untersetzungsgetriebe zum Anpassen und Reduzieren einer Drehgeschwindigkeit der Ausgangswellen (43' und 44') von mindestens zwei Motoren (41' und 42') vom Elektrotyp der zweiten Gruppe (40') umfasst.

10. Luftfahrzeug nach einem der Ansprüche 1 bis 9, **dadurch gekennzeichnet, dass** das Luftfahrzeug (1) eine erste Speicherkammer (50) zum Speichern einer ersten Verbrennungsenergiequelle aufweist, wobei die erste Speicherkammer (50) hydraulisch mit dem mindestens einen Triebwerk (3, 13) verbunden ist, um das mindestens eine Triebwerk (3, 13) mit der ersten Verbrennungsenergiequelle zu versorgen, wobei die erste Speicherkammer (50) ganz oder teilweise in Bezug auf ein Chassis (10) des Luftfahrzeugs (1) ausrückbar und konfiguriert ist, um durch eine zweite Speicherkammer (51) für eine zweite, elektrische Energiequelle ersetzt zu werden, die von der ersten Verbrennungsenergiequelle verschieden ist.

11. Luftfahrzeug nach einem der Ansprüche 1 bis 9, **dadurch gekennzeichnet, dass** das Luftfahrzeug (1') eine erste Speicherkammer (50') zum Speichern einer ersten, elektrischen Energiequelle umfasst, wobei die erste Speicherkammer (50') elektrisch mit dem mindestens einen Triebwerk (3, 13) verbunden ist, um das mindestens eine Triebwerk (3, 13) mit der ersten, elektrischen Energiequelle zu versorgen, wobei die erste Speicherkammer (50') ganz oder teilweise in Bezug auf ein Chassis (10') des Luftfahrzeugs (1') ausrückbar und konfiguriert ist, um durch eine zweite Speicherkammer (51') für eine zweite, von der ersten, elektrischen Energiequelle verschiedene Verbrennungsenergiequelle ersetzt zu werden.

12. Verfahren zur Vorbereitung (60, 70) eines modularen Luftfahrzeugs (1) nach einem der Ansprüche 1 bis 11 auf eine spezifische Aufgabe, **dadurch gekennzeichnet, dass** das Verfahren (60, 70) einerseits mindestens einen Vorbereitungsschritt, der aus der Gruppe mit den folgenden Vorbereitungsschritten ausgewählt wird:
- Bestimmen (61) des Autonomiebedarfs des Luftfahrzeugs (1) für die Durchführung der Aufgabe,
- Bestimmen (61') des Leistungsbedarfs des Luftfahrzeugs für die Durchführung der Aufgabe,
- Bestimmen (62) der mit einem Sicherheitsniveau der Aufgabe zusammenhängenden Randbedingungen,
- Bestimmen (63) der mit einem für diese Aufgabe maximal zulässigen Lärmbelastungsniveau verbundenen Randbedingungen,
und andererseits die folgenden Schritte umfasst:
- Erzeugen (64) einer Liste von mindestens zwei Triebwerken vom Verbrennungstyp und/oder vom Elektrotyp, wobei die Liste durch den mindestens einen Vorbereitungsschritt bedingt ist und spezifisch an die Aufgabe des Luftfahrzeugs (1) angepasst ist,
- Auswählen (65) des mindestens einen Triebwerks (3, 13) vom Verbrennungstyp oder vom Elektrotyp aus der Liste von mindestens zwei Triebwerken vom Verbrennungstyp und/oder vom Elektrotyp; und
- Installieren (66) des mindestens einen ausgewählten Triebwerks (3, 13) an dem Chassis (10) des Luftfahrzeugs (1),
- elektrisch Verbinden (67) zum elektrischen Verbinden des mindestens einen ausgewählten Triebwerks (3, 13) mit dem elektronischen Avioniksystem (5) zur Unterstützung der Steuerung des Luftfahrzeugs (1), und
- mechanisch Verbinden (68) zum mechanischen Verbinden des mindestens einen ausgewählten Triebwerks (3, 13) mit dem Hauptleistungsübertragungsgetriebe (4).

13. Verfahren nach Anspruch 12, **dadurch gekennzeichnet, dass** das Verfahren (70) einen Schritt des Verbindens (71) zum Verbinden einer Speicherkammer (51) einer an das mindestens eine ausgewählte Triebwerk (3, 13) angepassten Verbrennungs- oder Elektroenergiequelle mit dem Chassis (10) des Luftfahrzeugs (1) und einen Schritt des hydraulischen oder elektrischen Verbindens (72) zum Verbinden der Speicherkammer (51) mit dem mindestens einen ausgewählten Triebwerk (3, 13) umfasst.

## Claims

1. Aircraft (1) of modular type including:
- at least one rotor (2) capable of providing propulsion and/or lift for said aircraft (1) fully or in part,
- at least one power plant (3, 13) of the combustion motor type or of the electric motor type,
- a main gearbox (4) for mechanically transmitting a drive torque generated by said at least one power plant (3, 13) to said at least one rotor (2), and
- an avionics system (5) for assisting with the piloting of said aircraft (1),
**characterized in that** said aircraft (1) includes:
- at least two electrical connection interfaces (6, 7) which are continuously electrically connected to said avionics system (5), a first electrical connection interface (6) electrically connecting the avionics system (5) to a first power plant (3) of said at least one power plant (3, 13) and a second electrical connection interface (7) capable of being left free or electrically connecting the avionics system to a second power plant (13) of said at least one power plant (3, 13), and
- at least two mechanical connection interfaces (8, 9) continuously mechanically connected to said main gearbox (4), a first mechanical connection interface (8) mechanically connecting said main gearbox (4) to said first power plant (3) and a second mechanical connection interface (9) capable of being left free or mechanically connecting said main gearbox (4) to said second power plant (13), and **in that** said avionics system (5) is configured for automatically providing said assistance with piloting said aircraft (1), firstly when only said first power plant (3) is electrically connected to said first electrical connection interface (6), and secondly when both said first power plant (3) is electrically connected to said first electrical connection interface (6) and said second power plant (13) is electrically connected to said second electrical connection interface (7).

2. Aircraft according to claim 1, **characterized in that** said first power plant (3) is arranged in such a manner as to be retractable in relation to an airframe (10) of said aircraft (1) and configured to be replaced by another power plant of the combustion motor type or of the electric motor type that is distinct from said first power plant (3).

3. Aircraft according to any one of claims 1 to 2, **characterized in that** said second power plant (13) is arranged in such a manner as to be retractable in relation to an airframe (10) of said aircraft (1) and is configured to be replaced by another power plant of the combustion motor type or of the electric motor type that is distinct from said second power plant (13).

4. Aircraft according to any one of claims 1 to 3, **characterized in that** said first power plant (3) includes a first group (30) of at least two motors (31 and 32) of the combustion type or a first group (30') of at least two motors (31' and 32') of the electrical type.

5. Aircraft according to claim 4, **characterized in that** said aircraft (1) includes a first accessory gearbox (20), said first accessory gearbox (20) including at least two input shafts (21 and 22) mechanically connected to output shafts (33' and 34') of said at least two motors (31' and 32') of said first group (30, 30'), respectively, said first accessory gearbox (20) including an output shaft (23) mechanically connected to said first mechanical connection interface (8).

6. Aircraft according to claim 5, **characterized in that** said first accessory gearbox (20) includes a speed reducer for adapting and reducing a rotational speed of said output shafts (33' and 34') of said at least two motors (31' and 32') of the electric type of said first group (30').

7. Aircraft according to any one of claims 1 to 6, **characterized in that** said second power plant (13) includes a second group (40) of at least two motors (41 and 42) of the combustion type or a second group (40') of at least two motors (41' and 42') of the electric type.

8. Aircraft according to claim 7, **characterized in that** said aircraft (1) includes a second accessory gearbox (24), said second accessory gearbox (24) including at least two input shafts (25 and 26) mechanically connected to output shafts (43' and 44') of said at least two motors (41 and 42, 41' and 42') of said second group (40, 40'), respectively, said second accessory gearbox (24) including an output shaft (27) mechanically connected to said second mechanical connection interface (9).

9. Aircraft according to claim 8, **characterized in that** said second accessory gearbox (24) includes a speed reducer for adapting and reducing a rotational speed of said output shafts (43' and 44') of said at least two motors (41' and 42') of the electric type of said second group (40').

10. Aircraft according to any one of claims 1 to 9, **characterized in that** said aircraft (1) includes a first storage compartment (50) allowing a first combustible energy source to be stored, said first storage compartment (50) being hydraulically connected to said at least one power plant (3, 13) to supply said at least one power plant (3, 13) with said first combustible energy source, said first storage compartment (50) being fully or partially retractable in relation to an airframe (10) of said aircraft (1) and configured to be replaced by a second storage compartment (51) of a second electrical energy source distinct from said first combustible energy source.

11. Aircraft according to any one of claims 1 to 9, **characterized in that** said aircraft (1') includes a first storage compartment (50') allowing a first electrical energy source to be stored, said first storage compartment (50') being electrically connected to said at least one power plant (3, 13), in order to supply said at least one power plant (3, 13) with said first electrical energy source, said first storage compartment (50') being fully or partially retractable in relation to an airframe (10') of said aircraft (1') and configured to be replaced by a second storage compartment (51') for storing a second combustible energy source distinct from said first electrical energy source.

12. Method for preparing (60, 70) an aircraft (1) of modular type according to any one of claims 1 to 11 for a specific mission, **characterized in that** said method (60, 70) firstly includes at least one preliminary step chosen from among the group including the following preliminary steps:
- determining (61) the needs in terms of range of said aircraft (1) for carrying out said mission,
- determining (61') the needs in terms of performance of said aircraft for carrying out said mission,
- determining (62) the constraints related to a safety level for said mission,
- determining (63) the constraints related to a maximum noise level allowable for said mission, and secondly includes the following steps:
- generating (64) a list of at least two power plants of the combustion motor type and/or of the electric motor type, said list being conditioned by said at least one preliminary step and being specifically adapted to said mission of said aircraft (1),
- selecting (65) said at least one power plant (3, 13) of the combustion motor type or of the electric motor type from among the list of at least two power plants of the combustion motor type and/or of the electric motor type,
- installing (66) said at least one selected power plant (3, 13) on said airframe (10) of said aircraft (1),
- electrical connection (67) to electrically connect said at least one selected power plant (3, 13) to said avionics system (5) for assisting with the piloting of said aircraft (1), and
- mechanical connection (68) for mechanically connecting said at least one selected power plant (3, 13) to said main gearbox (4).

13. Method according to claim 12, **characterized in that** said method (70) includes a securing step (71) for securing to said airframe (10) of said aircraft (1) a storage compartment (51) of a combustible energy or electrical energy source adapted to said at least one selected power plant (3, 13), and a hydraulic or electrical connection step (72) for connecting said storage compartment (51) to said at least one selected power plant (3, 13).
